# EUROPEAN PATENT APPLICATION

(11) **EP 1 405 799 A1**
(43) Date of publication of application: **07.04.2004**
(21) Application number: 01949931.8
(22) Date of filing: 11.07.2001
(51) Int. Cl.: B65D 53/02, F23L 17/14, F01N 7/00

(54) **SEAL STRUCTURE OF CONTAINER AND DRAIN FILTER**

(71) Applicant: Mitsubishi Heavy Industries, Ltd., Tokyo 100-8315 (JP)
(72) Inventor: OHTSUKA, Takaaki, Mitsubishi Heavy Indust., Ltd, Nishi-kasugai-gun, Aichi 452-8561 (JP); TANAKA, Jiro, Mitsubishi Heavy Indust., Ltd, Nishi-kasugai-gun, Aichi 452-8561 (JP); KASAHARA, Hideaki, Mitsubishi Heavy Indust., Ltd, Nishi-kasugai-gun, Aichi 452-8561 (JP)
(74) Representative: Henkel, Feiler & Hänzel
(86) International application number: PCT/JP2001/005999
(87) International publication number: WO 2003/008290

(57) **Abstract**

The present invention relates to a seal structure for a container having a container body and a lid wherein an inside of the container body is sealed by providing the lid on the opening of the container body. In the seal structure of the present invention, a step having a predetermined depth is formed on the inner circumference or outer circumference of the upper edge of the container body, a round seal surface forming ring formed having a thickness identical to the depth of the step is provided on the upper surface of the step along the circumferential direction of the container body, and the lid is installed on a seal surface comprising the upper end surface of the container body and the upper surface of the seal surface forming ring, with a packing interposed therebetween.

## Description

### BACKGROUND OF THE INVENTION

### 1. Field of the Invention

The present invention relates to a seal structure for a container having an interior that is closed to air and fluid, and a drain filter provided in a gas heat pump type air conditioner that uses a gas engine, and separates and retains the drainage in the exhaust gas from a gas engine, for example.

### 2. Description of the Related Art

In recent years, air conditioners that carry out cooling and heating using a heat pump are being developed in which, instead of the conventionally used an electric motor, a gas engine is used as a power source for driving a compressor in a circuit of coolant. Air conditioners using this gas engine are generally called gas heat pump type air conditioners. The cost of running this gas heat pump air conditioner is low compared to the an conditioner provided with a compressor that uses the electric motor because gas, which has a comparatively low cost, is used as a fuel. Therefore, there is the advantage for consumers that costs can be reduced.

In the exhaust gas system of the gas engine that forms this type of gas heat pump air conditioner, a drain filter that separates and retains water in the exhaust gas is provided so that the water included in the exhaust gas from the gas engine is not dispersed into the outside environment. In this drain filter, the acidity of the drainage is neutralized by a neutralizer provided therein.

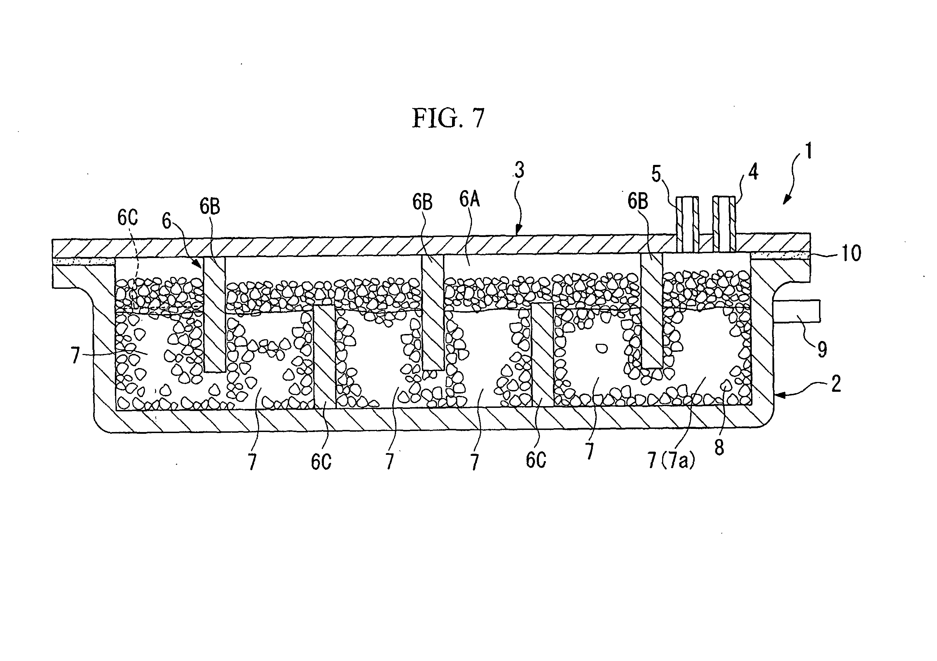

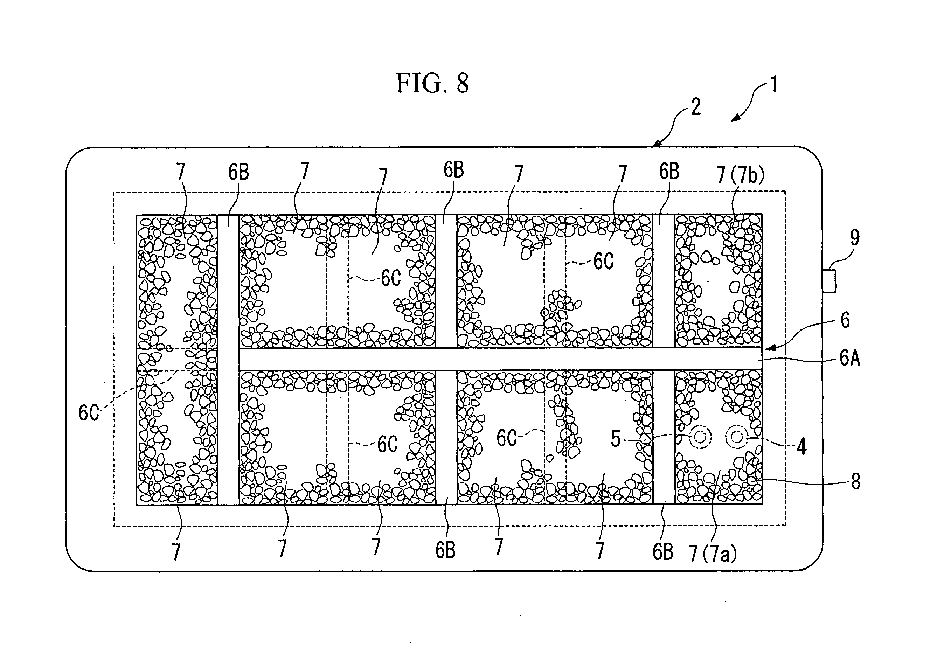

An example of this drain filter will be explained with reference to FIG. 7 and FIG. 8.

In these figures, reference numeral 1 is the drain filter. This drain filter 1 comprises a container body 2 open on the top and a lid 3 that is provided on the container body 2 to seal the container body 2. An exhaust gas inflow opening 4 and an exhaust gas outflow opening 5 are provided in the top of the lid 3.

Inside the container body 2, partition walls 6 are provided, and the inside of the container body 2 is partitioned into a plurality of vessels 7 by these partition walls 6. The partition walls 6 comprise a section partition wall 6A that is provided along a longitudinal direction of the container body 2 at the center of the container body 2 and partitions the inside of the container body 2 except for one end side, partition walls 6B that are disposed in plurality such that a gap is formed between them and the bottom surface of the container body 2, and lower partition walls 6C that are disposed such that a gap is formed between them and the lid 3. In addition, each of the vessels 7 demarked by the section partition wall 6A, the upper partition walls 6B, and the lower partition walls 6C is filled with a neutralizer 8 comprising calcium oxide.

The exhaust gas that has flown into the container body 2 from the exhaust gas inflow opening 4 is discharged from the exhaust gas outflow opening 5 after passing through the container body 2. Accompanying this, the drainage in the exhaust gas is retained in the first vessel 7a that communicates with the exhaust gas outflow opening 4 and the exhaust gas inflow opening 5, and removed from the exhaust gas.

In addition, the drainage retained in the first vessel 7a moves to the last vessel 7b after passing in sequence between the upper partition walls 6C and the bottom surface of the container body 2 and between the lower partition walls 6C and the lid 3, and is discharged from a drain exhaust opening 9 which is provided on the container body 2 so as to communicate with the last vessel 7b.

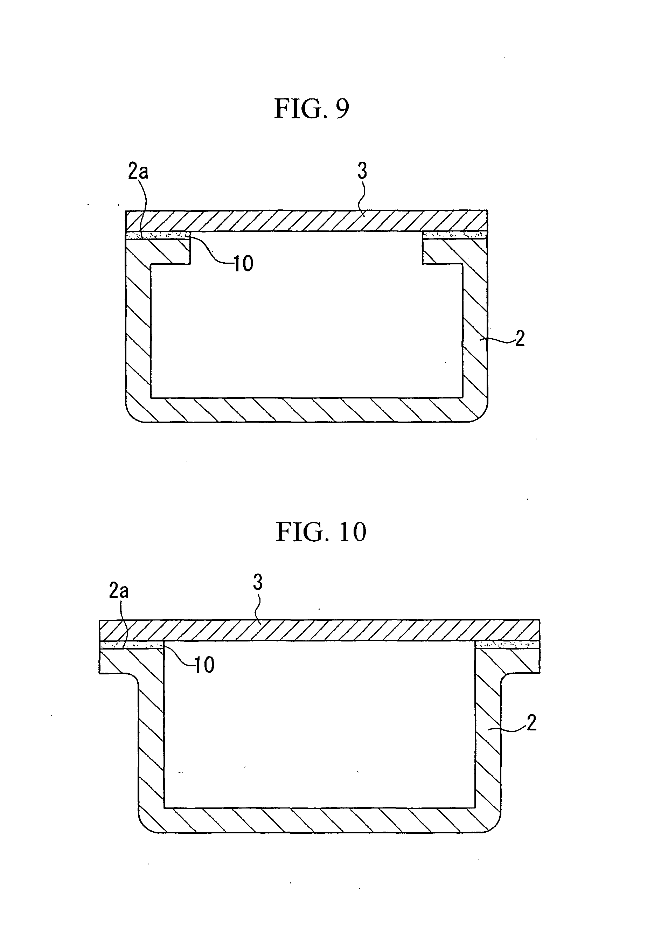

However, in such the drain filter 1, in a container requiring the inside to be air- and fluid-tight, the space between container body 2 and the lid 3 must be sealed. As several generally used structures for a seal structure between the container body 2 and the lid 3, as shown in FIG. 9, the upper end of the container body 2 is bent in the inward direction, or as shown in FIG. 10, the upper end of the container body 2 is be bent in the outward direction. Thereby, the width of the upper end surface of the container body 2 is enlarged to serve as a seal surface 2a, a packing 10 is provided between this seal surface 2a and the lid 3, and the packing 10 is held in place between the seal surface 2a and the lid 3.

At the same time, the drain filter 1 is required to be lightweight and small in order to be placed inside an outdoor unit. Therefore, making the lightweight drain filter is designed by forming this container out of a synthetic resin. In this case, as shown in FIG. 9, forming the seal surface 2a by bending the upper end of the container body 2 in the inward direction would be difficult when the molding of the container body 2 using a mold form, and thus, as shown in FIG. 10, a seal surface 2a must be formed by bending the upper end of the container body 2 in the outward direction.

However, in the case of the drain filter 1, the structure shown in FIG. 10 is also insufficient for maintaining the maximum volume for its limited outer size.

In addition, in the drain filter 1, the section partition wall 6A, and the upper partition walls 6B of the partition wall 6 are tightly fitted to the lower surface of the lid 3 by covering the upper surface of the container body 2 with a lid 3.

However, the partition walls 6 have a complex form that combines the section partition walls 6A, the upper partition walls 6B, and the lower partition walls 6C, and furthermore, the lid 3 is installed on the outer circumference of the container body 2; thus, a gap between the lid 3 and the section partition wall 6A and the upper partition walls 6B can easily occur in particular in proximity to the center of the drain filter 1.

When a gap occurs between the lid 3 and the section partition wall 6A and the upper partition walls 6B, a part of the exhaust gas flowing into the first vessel 7a from the exhaust gas inflow opening 4 flows into the last vessel 7b through this gap and may leak outside through the drainage discharge opening 9.

Furthermore, in the drain filter 1 having the structure described above, there are cases in which at low temperature, the heat of the exhaust gas influences the drainage retained in the container body 2 with difficulty, and the drainage freezes in the vessels 7 which are positioned downstream side in the direction of the flow of the drainage. Thus, a heater is provided on the drain filter 1 to prevent the freezing of the drainage. However, providing a heater causes the cost to increase, and furthermore, due to the enlargement of the size of the drain filter 1 that accompanies providing a heater, the space for mounting the drain filter 1 is increased, and therefore, downsizing the outside unit becomes difficult.

The present invention is provided in consideration of the problems described above, and an object of the present invention is to provide a seal structure and drain filter for a container that can attain an advantageous seal while maintaining the maximum volume in the limited space, and furthermore, can be molded.

In addition, it is another object of the present invention to provide a drain filter that allows the exhaust gas flowing in from the inflow opening to flow out from the outflow opening reliably without leaking to the outside at low cost.

Furthermore, it is another object of the present invention to provide a drain filter that allows downsizing by omitting the heater that prevents freezing.

### SUMMARY OF THE INVENTION

The present invention relates to a seal structure for a container having a container body and a lid wherein an inside of the container body is sealed by providing the lid on the opening of the container body. In the seal structure of the present invention, a step having a predetermined depth is formed on the inner circumference or outer circumference of the upper edge of the container body, a round seal surface forming ring formed having a thickness identical to the depth of the step is provided on the upper surface of the step along the circumferential direction of the container body, and the lid is installed on a seal surface comprising the upper end surface of the container body and the upper surface of the seal surface forming ring, with a packing interposed therebetween.

In this case, it is preferable that projections which project to the packing side are formed on the seal surface and the lid along the circumferential direction. Furthermore, it is preferable that the projections formed in the seal surface are formed on the upper end surface of the container body. In addition, it is preferable that the projections formed on the seal surface and the projections formed on the lid are offset in the transverse direction of the seal surface.

In addition, the present invention also relates to a drain filter that comprises a container body having an open top, a lid which is installed on the top of this container body to seal this container body, partition walls which are provided in the container body to partition the inside of the container body into a plurality of vessels, and a neutralizer which is provided in the vessels which are partitioned by the partition walls. One of the vessels communicates with an inflow opening for the exhaust gas that includes drainage and an outflow opening for exhaust gas in which the drainage has been separated, and serves as the first vessel into which the exhaust gas flows. The drainage of the exhaust gas that flows into this first vessel passes in sequence from the first vessel to each of the other vessels, and is discharged from the last vessel after being neutralized by a neutralizer in each of the vessels.

In the drain filter of the present invention, the container body and the lid are sealed by the sealing structure of the present invention that has been described above.

Alternatively, in the drain filter of the present invention, the first vessel is formed surrounded by a vessel body comprising a wall portion which is separated from said partition wall.

In this case, it is preferable that the bottom end of the vessel body abuts the bottom surface of the container body and the upper end of the vessel body forms a tubular shape that fits tightly on the lid. In addition, it is preferable that a notch that feeds the drainage to the adjacent vessel is formed at the bottom end of the vessel body.

Alternatively, in the drain filter of the present invention, the top of the partition wall that partitions the last vessel fits tightly with the lid, and a gap is formed between the other partition walls and the lid.

In this case, it is preferable that the outflow opening is provided above the adjacent vessel upstream of the last vessel in the flow direction of the drainage. In addition, it is preferable that a discharge opening that discharges the drainage from the last vessel is provided above the path of the drainage between the last vessel and the adjacent vessel upstream of the last vessel in the flow direction of the drainage.

### BRIEF EXPLANATION OF THE DRAWINGS

FIG. 1 is a cross-sectional drawing of a container showing an example of a seal structure of the container according to the present invention.
FIG. 2 is an exploded perspective drawing of the container showing an example of the seal structure of the container according to the present invention.
FIG. 3 is a cross-sectional drawing of a drain filter showing an example of the structure of the drain filter adapted to the seal structure of the container according to the present invention.
FIG. 4 is a cross-sectional drawing of the drain filter showing an example of the structure of the drain filter according to the present invention.
FIG. 5 is a schematic planar drawing of the container body of the drain filter showing an example of the structure of the drain filter according to the present invention.
FIG. 6 is a cross-sectional drawing of the drain filter showing an example of the drain filter according to the present invention.
FIG. 7 is a cross-sectional drawing of the drain filter showing an example of the structure of a conventional drain filter.
FIG. 8 is a cross-sectional drawing of the drain filter showing an example of the structure of the conventional drain filter.
FIG. 9 is a cross-sectional drawing of a container showing an example of a seal structure for the conventional container.
FIG. 10 is a cross-sectional drawing of the container showing an example of a seal structure for the conventional container.

### DESCRIPTION OF THE PREFERRED EMBODIMENTS

First, an example of a seal structure of a container for implementing the present invention will be explained with reference to the figures.

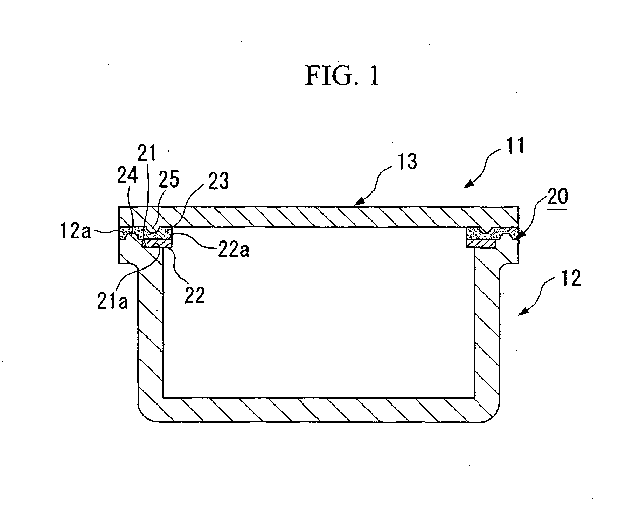

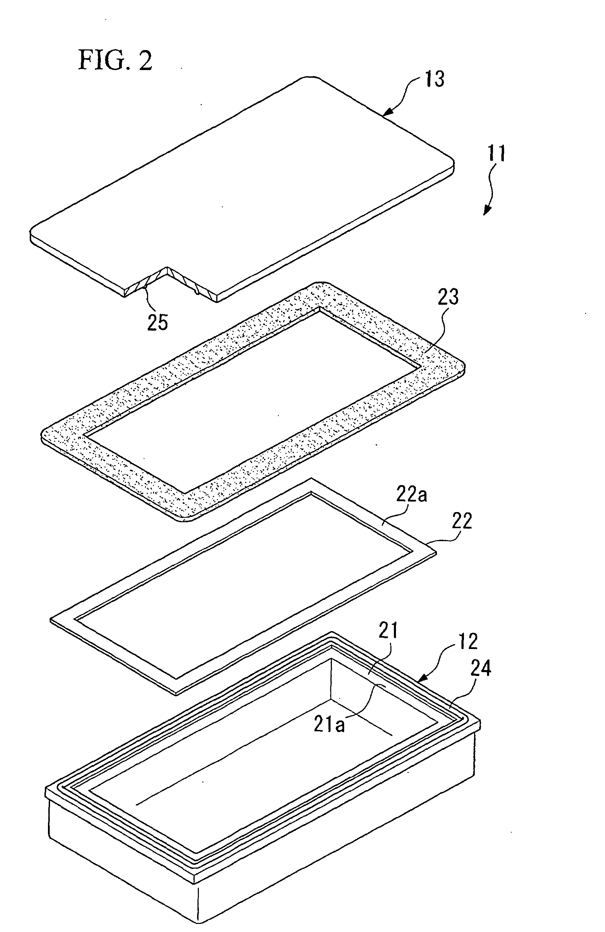

In FIG. 1 and FIG. 2, reference numeral 11 is the container according to the present invention. This container 11 comprises a container body 12 which is made of a synthetic resin and is open at the top and a lid 13 installed on top of this container body to seal the inside of the container body 12.

The upper edge of the container body 12 is curved outwards, and inside this curved part, a step 21 having a predetermined depth is formed along the circumferential direction of the container body 12. A flat ring-shaped seal surface forming ring 22 is fitted to this step 12. Similar to the container body 12, this seal surface forming ring 22 is formed by a synthetic resin, and the outer circumferential shape thereof has an outer circumferential shape identical to that of the step 21, and the thickness of this seal surface forming ring 22 is identical to the depth of the step 21.

By fitting the seal surface forming ring 22 into the step 21, an upper end surface 12a of the container body 12 and the surface 22a of the seal surface forming ring 22 form one surface. In addition, the upper end surface 12a of the container body 12 and the upper surface 22a of the seal surface forming ring 22 form a seal surface 20 on the container body 12 side.

A circular packing 23 comprising, for example, silicon rubber, is disposed on the seal surface 20. In addition, on the upper end surface 12a of the container body 12 and the lower surface of the lid 13, projections 24 and 25 that each project to the packing 23 side are formed along the circumferential direction of the container body 12. These projections 24 and 25 are each formed so as to be offset in the transverse direction of the seal surface 20. That is, the projection 25 formed on the lid 13 is positioned inside the projection 24 formed on the upper end surface 12a of the container body 12.

In addition, by mounting the lid 13 on the upper surface of the container body 12 with the packing 23 interposed therebetween and then fastening the container body 12 and the lid 13 using bolts, the lid 13 is installed on the container body 12 in a state sealed by the packing 23, and the inside of the container body 12 is sealed air- and fluid-tight.

In this manner, according to the seal structure of the container 11 described above, by disposing the seal surface forming ring 22 formed in a ring shape on the step 21 formed in the upper inner circumferential side of the container body 12, the surface area of the seal surface 20 formed by the upper end surface 12a of the container body 12 and the surface 22a of the seal surface forming ring 22 can be increased extremely easily. Therefore, by installing the lid 13 on the seal surface 20 with the packing 23 interposed therebetween, a favorable sealing capacity between the container body 12 and the lid 13 can be maintained, and the inside of the container body 12 can be sealed air- and fluid-tight.

In addition, according to this seal structure, it is not necessary to bend the upper end of the container body 12 outward very much to obtain the seal surface 20 having a predetermined width. As a result, it is possible to easily manufacture a container 11 that can maintain the maximum volume in the limited outer size using a mold.

In addition, because the packing 23 is pressed along the circumferential direction by the projection 24 formed on the upper end surface 12a of the container body 12 and the projection 25 formed on the lid 13, the sealing capacity is further improved at the pressure locations on the packing 23 due to these projections 24 and 25. In addition, it is possible to easily mold the projection 24 as well when manufacturing the container body 12 by molding.

Furthermore, because the projections 24 and 25 are offset in the transverse direction of the seal surface 20, the sealing capacity is improved at each of the pressure locations on the packing 23 due to these projections 24 and 25. That is, the sealing capacity can be respectively increased at a plurality of seal locations formed on the inside and the outside of the container 11, and thereby it is possible to obtain a more favorable sealing capacity.

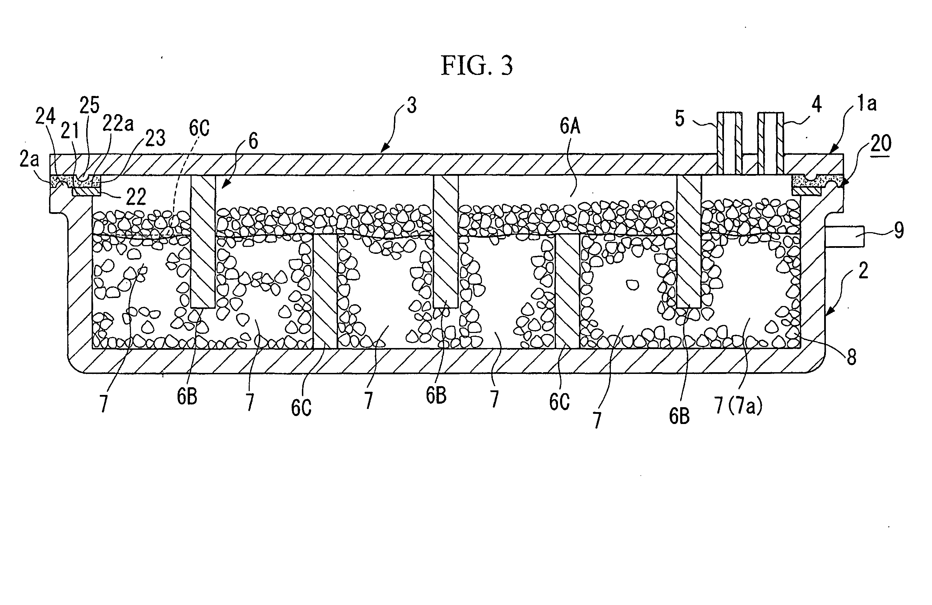

An example of the drain filter applied to the seal structure described above is shown in FIG. 3. In the following description, parts having a structure identical to the conventional drain filter 1 described above and the container 11 described above are denoted by identical reference numerals, and their explanations are omitted.

In this drain filter 1a, the inside of the drain filter 1a is reliably sealed air- and fluid-tight by installing the lid 3 on the seal surface 20, which is formed on the container body 2 side by the upper end surface 2a of the container body 2 and the upper surface 22a of the seal surface forming ring 22 and has an increased surface area, with the packing 23 interposed therebetween. As a result, leakage of the exhaust gas and drainage flowing in from the exhaust gas inflow opening 4 to the outside can be reliably prevented, and can be discharged after being reliably neutralized by the neutralizer 8 that is filled in each of the vessels 7 partitioned by the partition walls 6.

Moreover, in the example described above, the step 21 is formed on the upper end of the circumferential side of the container body 2 and 12, the seal surface forming ring 22 is fitted to this step 21, and thereby the seal surface 20 is formed. However, of course it is also possible to form the step 21 along the circumferential direction on the outer circumference side of the upper end of the container body 12, fit the seal surface forming ring 22 in this step 21 to form the seal surface 20.

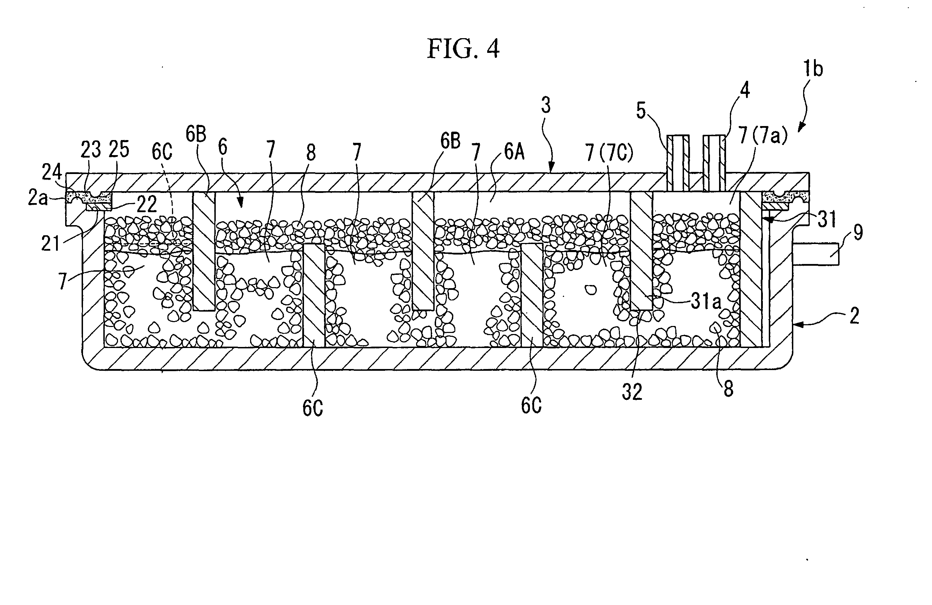

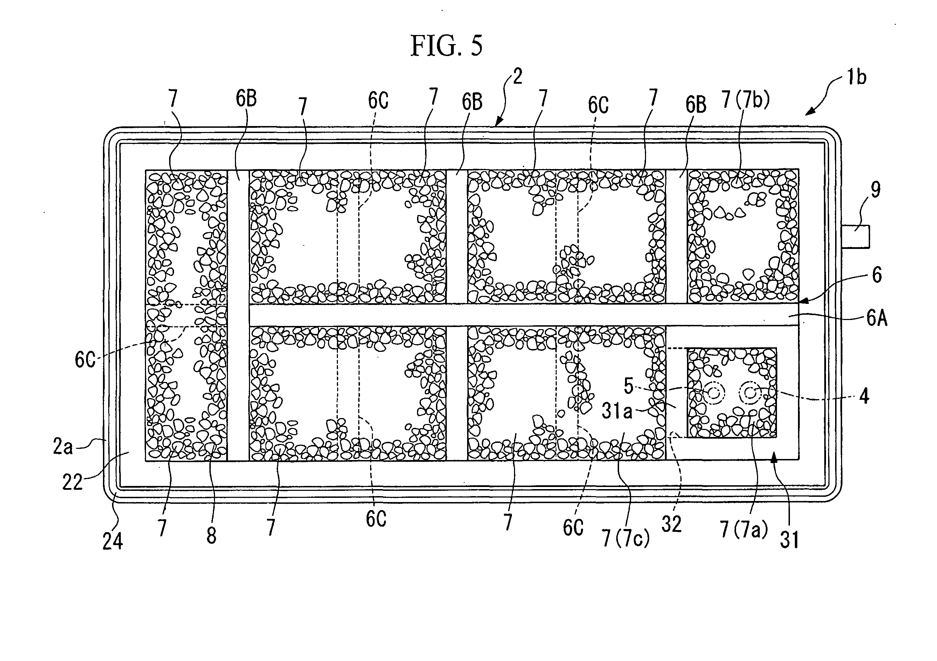

Another example of the drain filter according to the present invention is shown in FIG. 4 and FIG. 5. In this drain filter 1b, the first vessel 7a is formed by a vessel body 31.

This vessel body 31 is formed so as to have a rectangular shape in a planar view, and a notch 32 is formed on the lower end of one edge (the edge positioned on the downstream side in the direction of the flow of the drainage). In addition, the first vessel 7a formed by the vessel body 31 and the adjacent vessel 7c downstream of the first vessel 7a in the direction of the flow of the drainage are separated by a wall portion 31a that forms the notch 32.

When the lid 3 is installed on the container body 2, the lid 3 respectively abuts the section partition wall 6A and the upper partition walls 6B of the partition walls 6, and the upper surface of the vessel body 31, and is sealed by a sealing material (not illustrated) which is provided between the lid 3 and the section partition wall 6A, the upper partition walls 6B, and the vessel body 31.

Here, the first vessel 7a is formed by a vessel body 31 having a structure that is separate from the complex structure of the partition walls 6, which is a combination of the section partition wall 6A, the upper partition walls 6B, and the partition walls 6C. Thereby, the lid 3 is reliably fastened to the upper surface of the vessel body 31, and a reliable airtight state in the first vessel 7a can'be obtained. Thereby, even in the case that the air-tightness between the section partition wall 6A, the upper partition walls 6B and the lid 3 is poor at the center of the drain filter 1b, a high airtight state is maintained at the first vessel 7a. As a result, the exhaust gas flowing into the first vessel 7a from the exhaust gas inflow opening 4 flows out from the exhaust gas outflow opening 5 without leaking into the other vessels 7.

Specifically, according to this drain filter 1b, the exhaust gas that flows into the first vessel 7a flows into the last vessel 7b, and the problems such as leaking to the outside from the drainage discharge opening 9 can be reliably prevented. In addition, the tube shaped vessel body 31 is disposed inside the container body 2, and thereby an extremely simple and low cost structure is obtained wherein the air-tightness of the first vessel 7a that the exhaust gas flows into and out of is increased without providing a special seal structure. Furthermore, the drainage reliably flows out from the notch 32 formed at the lower edge of the vessel body 31 to the other adjacent vessel 7c.

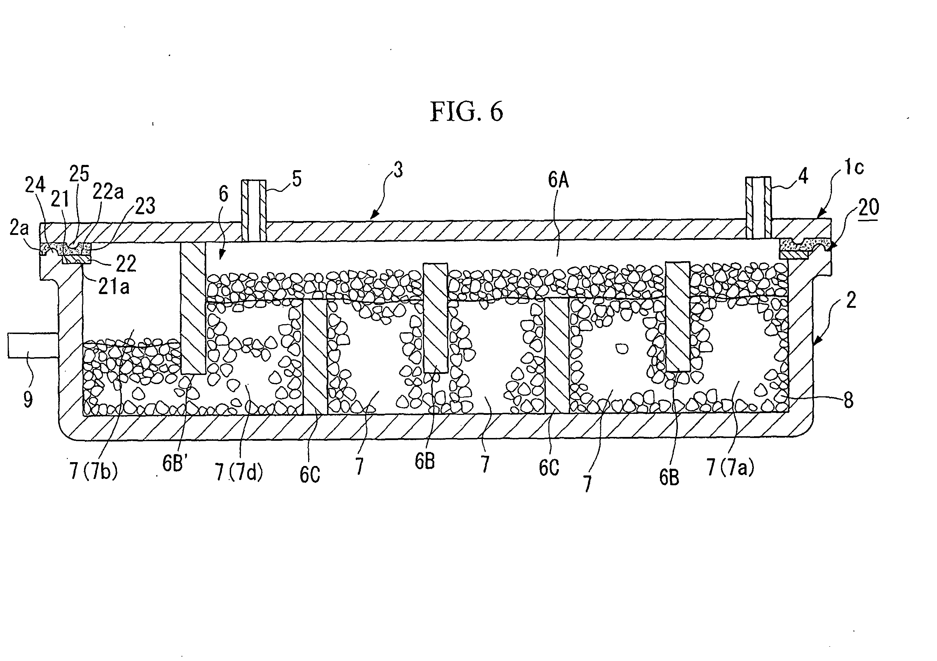

Another example of the drain filter according to the present invention is shown in FIG. 6.

Below, the embodiment of the drain filter according to the present invention will be explained with reference to the figure. In this drain filter 1c, among the upper partition walls 6B, the upper edge surface of the upper partition wall 6B' that divides the last vessel 7b communicating with the drainage exhaust water opening 9 formed in the inner surface of the container body 2 is tightly fitted to the lid 3, and a gap is provided between the other upper partition walls 6B and the lid 3. Here, the drainage discharge opening 9 is provided above the gap between the bottom surface of the container body 2 and the upper partition wall 6B' forming the path of the drainage between the last vessel 7b and the adjacent vessel 7d upstream of the last vessel 7b in the direction of flow of the drainage.

In addition, on the lid 3, an exhaust gas inflow opening 4 is provided above the first vessel 7a formed on one end side of the container body 2, and an exhaust gas outflow opening 5 is provided in proximity to the upper partition wall 6B' that partitions the last vessel 7b. This exhaust gas outflow opening 5 is provided above the adjacent vessel 7d upstream of the last vessel 7b.

The exhaust gas which flows into the container body 2 from the exhaust gas inflow opening 4, after retaining the included drainage in the first vessel 7a, passes above each of the vessels 7 except for the last vessel 7b, and flows out to the outside from the exhaust gas outflow opening 5 above the adjacent vessel 7d upstream of the last vessel 7b.

At the same time, the drainage in the exhaust gas which flows into the container body 2 from the exhaust gas inflow opening 4 and retained in the first vessel 7a, flows into the last vessel 7b after passing in sequence between the upper partition wall 6B and the bottom surface of the container body 2 and between the lower partition walls 6C and the lid 3, and is then discharged from the drainage discharge opening 9 which communicates with the last vessel 7b.

According to this drain filter 1c, the upper end surface of the upper partition wall 6B' that partitions the last vessel 7b is tightly fitted to the lid 3, and a gap is provided between the other upper partition walls 6B and the lid 3. Thereby, the exhaust gas flowing in above the first vessel 7a from the exhaust gas inflow opening 4 passes to the upper portion of the other vessels 7, excluding the last vessel 7b, through this gap. Therefore, even at a low temperature, the drainage retained in the container body 2 can be thawed by the heat of the exhaust gas, and as a result, a heater becomes unnecessary, and the downsizing and cost reduction of the drain filter can be implemented. Furthermore, because the exhaust gas outflow opening 5 is provided above the adjacent vessel 7d upstream of the last vessel 7b, the exhaust gas flowing in above the first vessel 7a passes above the other vessels 7 in sequence from one end of the container body 2 towards the other end. As a result, the heat of the exhaust gas is applied to the other vessels 7, excluding the last vessel 7b, and it is possible to uniformly thaw the drainage using the exhaust gas.

In addition, because the upper end surface of the upper partition wall 6B' that partitions the last vessel 7b is tightly fitted to the lid 3, the inflow of the exhaust gas into the last vessel 7b can be prevented. As a result, problems such as the exhaust gas leaking to the outside along with the drainage from the last vessel 7b can be reliably prevented.

Furthermore, because the drainage discharge opening 9 is provided above the gap between the bottom surface of the container body 2 and the upper partitioning wall 6B' that forms the path for the drainage between the last vessel 7b and the adjacent vessel 7d upstream of the last vessel 7b, a state in which the top of the gap is filled with the drainage is maintained. As a result, the exhaust gas in the last vessel 7b does not flow in through this gap, and leakage of the exhaust gas from the drainage discharge opening 9 can be reliably prevented.

## Claims

1. A seal structure for a container comprising a container body and a lid wherein an inside of said container body is sealed by providing said lid on an opening of said container body, and wherein:
a step having a predetermined depth is formed on an inner circumferential side or an outer circumferential side of an upper end of said container body;
a circular seal surface forming ring having a thickness identical to a depth of said step is disposed along a circumferential direction of said container body on an upper surface of said step; and
said lid is mounted on a seal surface that comprises an upper end surface of said container body and an upper surface of said seal surface forming ring with packing interposed therebetween.

2. A seal structure according to claim 1, wherein projections that project to said packing side are formed along said circumferential direction on said seal surface and said lid.

3. A seal structure according to claim 2, wherein the projections formed on said seal surface are formed on the upper end surface of said container body.

4. A seal structure according to claim 2 or claim 3, wherein the projection formed on said seal surface and the projection formed on said lid are offset in a transverse direction of said seal surface.

5. A drain filter comprising a container body having an open top, a lid installed on the top of this container body and closes off an inside of said container body, partition walls provided inside said container body that partition said container body into a plurality of vessels, and a neutralizer that is provided inside the vessels that are partitioned by these partition walls, and in which one of said vessels communicates with an inflow opening for exhaust gas that includes drainage and an outflow opening for exhaust gas from which the drainage has been separated out and serves as a first vessel into which the exhaust gas flows, the drainage in the exhaust gas that has flowed into this first vessel passes in sequence from the first vessel to each of the other vessels, and is discharged from a last vessel after being neutralized by the neutralizer in each of the vessels, wherein:
said container body and said lid are sealed by a seal structure according to any of claims 1 through 4.

6. A drain filter comprising a container body having an open top, a lid installed on the top of this container body and closes off an inside of said container body, partition walls provided inside said container body that partition said container body into a plurality of vessels, and a neutralizer that is provided inside the vessels that are partitioned by these partition walls, and in which one of said vessels communicates with an inflow opening for exhaust gas that includes drainage and an outflow opening for exhaust gas from which the drainage has been separated out and serves as the first vessel into which the exhaust gas flows, the drainage in the exhaust gas that has flowed into this first vessel passes in sequence from the first vessel to each of the other vessels, and is discharged from the last vessel after being neutralized by the neutralizer in each of the vessels, wherein:
said first vessel is formed by being enclosed by a vessel body comprising a wall portion which is separated from said partition wall.

7. A drain filter according to claim 6, wherein a lower edge of said vessel body abuts a bottom surface of said container body and an upper edge of said vessel body forms a tube that fits tightly into said lid.

8. A drain filter according to claim 6, wherein notches that feed the drainage to the adjacent vessel are formed on a lower end of said vessel body.

9. A drain filter comprising a container body having an open top, a lid installed on the top of this container body and closes off an inside of said container body, partition walls provided inside said container body that partition said container body into a plurality of vessels, and a neutralizer that is provided inside the vessels that are partitioned by these partition walls, and in which one of said vessels communicates with an inflow opening for exhaust gas that includes drainage and an outflow opening for exhaust gas from which the drainage has been separated out and serves as the first vessel into which the exhaust gas flows, the drainage in the exhaust gas that has flowed into this first vessel passes in sequence from the first vessel to each of the other vessels, and is discharged from the last vessel after being neutralized by the neutralizer in each of the vessels, wherein:
an upper part of the partition walls that partition said last vessel tightly fit into said lid, and a gap is formed between the other of said partition walls and said lid.

10. A drain filter according to claim 9, wherein said outflow opening is provided above the adjacent vessel upstream of said last vessel in a flow direction of the drainage.

11. A drain filter according to claim 10, wherein a discharge opening that discharges the drainage from said last vessel is provided above a path of the drainage between said last vessel and the adjacent vessel upstream of said last vessel in a flow direction of the drainage.
